(19) Europäisches Patentamt
European Patent Office
Office européen des brevets

(11) EP 3 481 223 B1

(12) **EUROPEAN PATENT SPECIFICATION**

(45) Date of publication and mention of the grant of the patent:
**02.12.2020 Bulletin 2020/49**

(21) Application number: **17740687.3**

(22) Date of filing: **06.07.2017**

(51) Int Cl.:
***A23K 10/37** (2016.01)* ***A23K 10/30** (2016.01)*
***A23K 20/163** (2016.01)* ***A23K 50/75** (2016.01)*

(86) International application number:
**PCT/EP2017/067028**

(87) International publication number:
**WO 2018/007562 (11.01.2018 Gazette 2018/02)**

(54) **A WHEAT BRAN FRACTION FOR USE TO COMBAT SALMONELLA INFECTION**

WEIZENKLEIEBRUCHTEIL ZUR VERWENDUNG BEI DER BEKÄMPFUNG VON SALMONELLENINFEKTION

FRACTION DE SON DE BLÉ À UTILISER POUR LUTTER CONTRE LA SALMONELLOSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2016 EP 16178623**

(43) Date of publication of application:
**15.05.2019 Bulletin 2019/20**

(73) Proprietors:
- **Universiteit Gent**
  **9000 Gent (BE)**
- **Katholieke Universiteit Leuven**
  **3000 Leuven (BE)**

(72) Inventors:
- **VAN IMMERSEEL, Filip**
  **9810 Eke (BE)**
- **DUCATELLE, Richard**
  **9790 Wortegem-Petegem (BE)**
- **VAN DE WIELE, Tom**
  **9820 Merelbeke (BE)**
- **VERMEULEN, Karen**
  **9000 Gent (BE)**
- **COURTIN, Christophe**
  **3012 Wilsele (BE)**
- **VERSPREET, Joran**
  **3001 Heverlee (BE)**

(56) References cited:
**JP-A- 2005 245 205**

- **L. L. MIKKELSEN ET AL: "Effects of Physical Properties of Feed on Microbial Ecology and Survival of Salmonella enterica Serovar Typhimurium in the Pig Gastrointestinal Tract", APPLIED AND ENVIRONMENTAL MICROBIOLOGY, vol. 70, no. 6, 1 June 2004 (2004-06-01), pages 3485-3492, XP055304697, US ISSN: 0099-2240, DOI: 10.1128/AEM.70.6.3485-3492.2004**
- **MARTIN-PELAEZ S ET AL: "Different fibrous ingredients and coarsely ground maize affect hindgut fermentation in the pig in vitro but not Salmonella Typhimurium survival", ANIMAL FEED SCIENCE AND TECHNOLOGY, ELSEVIER, AMSTERDAM, NL, vol. 153, no. 1-2, 26 August 2009 (2009-08-26), pages 141-152, XP026448421, ISSN: 0377-8401 [retrieved on 2009-07-07]**
- **EECKHAUT V ET AL: "Arabinoxylooligosaccharides from Wheat Bran Inhibit Salmonella Colonization in Broiler Chickens", POULTRY SCIENCE,, vol. 87, no. 11, 1 November 2008 (2008-11-01), pages 2329-2334, XP009110530, ISSN: 0032-5791**
- **DZIEDZIC KRZYSZTOF ET AL: "Effect of Wheat Dietary Fiber Particle Size during DigestionIn Vitroon Bile Acid, Faecal Bacteria and Short-Chain Fatty Acid Content", PLANTS FOODS FOR HUMAN NUTRITION, KLUWER ACADEMIC PUBLISHERS, NL, vol. 71, no. 2, 29 February 2016 (2016-02-29), pages 151-157, XP035929359, ISSN: 0921-9668, DOI: 10.1007/S11130-016-0537-6 [retrieved on 2016-02-29]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Technical field of the invention

The present invention relates to a method of reducing human salmonellosis due to consumption by contaminated food. More in particular, the present invention discloses a specific wheat bran fraction that reduces colonization of *Salmonella* bacteria in the gut of animals which are part of the human food chain. The present invention indeed demonstrates that animals such as broilers which are given feed supplemented with the latter feed bran fraction -and are then infected with *Salmonella*- have a significantly reduced number of *Salmonella* bacteria in their cecum and shed less bacteria in their environment when compared to control animals which are given non-supplemented feed.

Background art

Dietary fibers (DF) are carbohydrate polymers and oligomers that escape digestion in the small intestine and pass into the hindgut where they are (partially) fermented. Current classification systems are based on physicochemical properties such as water-holding capacity, viscosity and the degree to which they are fermented by the microbial gut community [1-3]. These physicochemical properties can be altered by processing [4, 5]. Based on the reaction with water, DF can be classified as either soluble or insoluble [6]. In general, water-insoluble DF (such as cellulose, lignin and some hemicelluloses) are thought to be less fermentable, while water-soluble DF (such as pectin) mostly are fermentable[1-3]. A significant part of the beneficial health effects attributed to DF consumption is believed to arise from their fermentation [7]. There is, however, not always a clear relation between DF solubility and fermentability[8, 9]. For example, it has been shown that some insoluble DF such as cellulose can be fermented and affect host health [10-12]. So both soluble and insoluble DF can have effects on gut health[8, 9]. The consumption of DF is generally believed to be beneficial for intestinal health. The ingestion of soluble DF such as arabinoxylooligosaccharides (AXOS), can strengthen the integrity of the mucus layer and gut epithelium through the production of short chain fatty acids (SCFA). Butyric acid has been proposed as the SCFA of greatest importance. It is a major energy source for colonocytes and is known to have anti-inflammatory effects, to reinforce various components of the mucosal barrier and to modulate oxidative stress [13, 14]. Wheat bran is recognized to be a highly concentrated source of insoluble fiber and consists of both fermentable and non-fermentable DF [15]. Wheat bran is an abundantly available by-product from the milling of wheat into flour. It constitutes 14-16% of the wheat kernel and comprises the outer coverings (pericarp), the aleurone layer and remnants of starchy endosperm [16-18]. The main DF present are glucuronoarabinoxylans linked to other macromolecules (such as lignin, proteins or both), cellulose and mixed linked (1-3),(1-4)-β-D-glucans, constituting respectively 70%, 24% and 6% of total wheat bran DF [19]. These arabinoxylans and β-glucans are water-insoluble [19]. Besides DF, starch (10-20%), proteins (15-22%) and lignin (4-8%) are the predominant chemical constituents of the wheat bran [17].

Nutritional interventions have been shown to be useful tools to reduce colonization of the chicken gut with pathogens. The intake of wheat bran-derived AXOS by chickens for example, can increase the resilience against pathogens such as *Eimeria* and *Salmonella* [18, 20, 21]. Although the number of human salmonellosis cases is decreasing in many regions worldwide, *Salmonella* remains an important zoonotic agent of global importance [22]. As human salmonellosis cases are often the consequence of the consumption of contaminated food products derived from animals, control of *Salmonella* in food producing animals remains important. Different approaches to control *Salmonella* using feed additives have already been investigated, many of which gave highly variable results. These include organic acids, probiotics, competitive exclusion products, and a variety of prebiotics [20, 23-25]. "Mikkelsen et al. (36) disclose that the use of meal for pigs containing wheat which is coarsely ground decreases the survival of Salmonella when compared with fine meal feed.

Martin-Pelaez et al. (37) show that the addition of wheat bran to feed for pigs fails to induce any inhibitory effect on the growth of Salmonella typhimurium.

Eeckhaut el al. (38) show that arabinoxylanoligosaccharide, obtained by hydrolysis from wheat bran, inhibit Salmonella colonization in broiler chickens. JP2005245205 to Kyodo Shiryo Co LTD disclose mixed feed for preventing Salmonella infection in ducks comprising rice bran of which more than 40% have a particle size of at least 1 mm.

Dziedzic Krzysztof et al. (39) teach that digestion of fine wheat fibre fractions promotes the concentration of short fatty acids in comparison with large wheat fibre fractions.

However, there is still a need to search for alternative and effective products and processes that significantly reduce *Salmonella* colonization in food animals.

Brief description of figures

**Figure 1**. Mass based cumulative particle size distributions of wheat bran. Pre-sieved coarse wheat bran had a mass based average particle size (dav) of 1687 μm. The dav of this material was ultimately reduced down to 77 μm. Adapted from Jacobs et al. (2015) [26].

**Figure 2**. Cecal colonization by *Salmonella enteritidis* (SE147). All chickens (n=20) were inoculated with $10^6$ CFU *Salmonella enteritidis* (SE147) on day 10 of the experiment. On dpi+4, the chickens were euthanized and *Salmonella* counts in cecum were determined. The different bran fractions are depicted on the x-axis while the y-axis shows log of the number of colony forming units per gram cecum. Horizontal lines represent the mean log value (CFU/g tissue), error bars represent the standard deviation. The dotted line indicates the detection limit prior to enrichment. *0.01 <p≤0.05; **p≤0.01

**Figure 3**. The number of total Bacteria (A) and butyryl-CoA:acetate-CoA transferase gene copies (B) in cecal contents obtained from broilers fed different wheat bran fractions. Ten chickens per group were sampled. Each group received a standard feed supplemented with 1% of a bran fraction which is indicated on the x-axis. Horizontal lines represent the mean log value (copy number/g wet content), error bars represent the standard deviation. *0.01 <p≤0.05; **p≤0.01

**Figure 4.** Cecal colonization by *Salmonella enteritidis* strain SE147 after experimental infections of broilers being fed different wheat bran fractions. In every group, one chicken in five (n=12) was inoculated with $10^8$ CFU of *Salmonella enteritidis* strain SE147 when they were 10 days old. On dpi+4, dpi+18 and dpi+32, 20 chickens were euthanized in each group and *Salmonella* counts in the ceca were determined. The results are shown per autopsy day (x-axis). The y-axis shows the Salmonella counts per gram cecum. Horizontal lines represent the mean log value (CFU/g tissue), error bars represent the standard deviation. The dotted line indicates the enrichment level. • control, ■ 1687 μm, ▲ 278 μm. **0.001 ≤p≤0.01

**Figure 5**. Amounts of total SCFA (A), acetic acid (B), propionic acid (C) and butyric acid (D) produced during *in vitro* fermentations of wheat bran with different particle sizes. Supernatant of the *in vitro* fermentations was collected after 24h. Total amount of SCFA was calculated as the sum of acetic, propionic and butyric acid. Bars represent the mean, error bars represent the standard deviation. *0.01 <p≤0.05; **p≤0.01

**Figure 6.** Relative expression of the *hilA* gene after exposure of *Salmonella enteritidis hilA*-lux or *rpsM-lux* fusion construct strains to *in vitro* fermented wheat bran fractions (y-axis). Overnight cultures *of Salmonella enteritidis* strain SE147 carrying a plasmid containing either *hilA*-luxCDABE or *rpsM*-luxCDABE transcriptional fusions were diluted 1:100 in LB medium supplemented with supernatant (1:1) derived from respectively the fermentation without bran (control), with unmodified bran (1687 μm) and bran with reduced particle size (278 μm) (x-axis). The diluted cultures were grown in microplates at 37°C for 15 hours. Horizontal lines represent the mean, error bars represent the standard deviation. Data represents the measurement after 15 hours of incubation. **0.001 ≤p≤0.01; *** p<0.001

**Figure 7**. Effect of particle size on the ability of *Salmonella* to invade host cells. *Salmonella enteritidis* bacteria were pre-incubated for 15 hours at 37°C in LB medium supplemented with supernatant (1:1) derived from one of three fermentation reactions in which no bran (control), unmodified bran (1687 μm) and bran with reduced particle size (278 μm) were added. Hereafter an invasion assay was performed. Invasion was calculated as the percent invaded bacteria relative to the initial number of inoculated bacteria (y-axis). The different bran fractions are depicted on the x-axis. Horizontal lines represent the mean, error bars represent the standard deviation. *0.01 <p≤0.05; **p≤0.01

## Summary of invention

As *Salmonella* control in the live phase of meat production is an important aspect of *Salmonella* control programs in Europe, the present invention relates to much needed substances that protect animals from *Salmonella* colonization.

More specifically, the present invention relates to a wheat bran fraction with a mass based average particle size ranging between 273 and 283 μm for use to a reduce colonization of bacteria belonging to the genus Salmonella in the gut of an animal.

Even more specifically, the present invention relates to a wheat bran fraction as described above wherein said mass based average particle size is 278 μm.

Moreover, the present invention relates to a wheat bran fraction as described wherein said animal is a chicken and more specifically wherein said chicken is a broiler.

The present invention further relates to a wheat bran fraction as described above wherein said bacteria belong to the species *Salmonella enteritidis.*

Moreover, the present invention relates to a wheat bran fraction as described above wherein said gut is the cecum.

Description of the invention

The invention relates to a wheat bran fraction with a mass based average particle size ranging between 273 and 283 μm for use to a reduce colonization of bacteria belonging to the genus *Salmonella* in the gut of an animal.

The term 'wheat bran' relates to an abundantly available by-product from the milling of wheat into flour. It constitutes 14-16% of the wheat kernel and comprises the outer coverings (pericarp), the aleurone layer and remnants of starchy endosperm [16-18]. Wheat bran is recognized to be a highly concentrated source of insoluble fiber and consists of both fermentable and non-fermentable DF [15]. The main DF present are glucuronoarabinoxylans linked to other macromolecules (such as lignin, proteins or both), cellulose and mixed linked (1-3),(1-4)-β-D-glucans, constituting respectively 70%, 24% and 6% of total wheat bran DF [19]. These arabinoxylans and β-glucans are water-insoluble [19]. Besides DF, starch (10-20%), proteins (15-22%) and lignin (4-8%) are the predominant chemical constituents of the wheat bran [17].

The term 'fraction with a mass based average particle size ranging between 273 and 283 μm' relates in essence to a fraction with a mass based average particle size of about 278 μm. The term 'about' relates to a mass based average particle of 278 μm +/- 5 μm or, in other words, to said a mass based average particle size ranging between 273 and 283 μm. The particle size of wheat bran can be reduced as described [26]. In short, any wheat bran such as commercial wheat bran (Dossche Mills, Deinze, Belgium) can be reduced in particle size with a Cyclotec 1093 Sample mill (FOSS, Höganäs, Sweden). By changing the grinding ring and/or the mesh size of the final sieve of the mill, bran fractions with differing particle sizes are obtained. The particle size distribution of the resulting fractions is determined by sieving 20.0 g of bran on a set of sieves with mesh sizes of 4500, 2000, 1000, 710, 500, 400, 250, 200, 160, 125, 112, 90, 50, and 38 μm. The set of sieves is shaken for 30 min at a frequency of 1.5 with a retch Vibratory Sieve Shaker (Aartselaar, Belgium) and each sieve is gently brushed to avoid clogging of the sieve pores. The mass of the bran that remained on each sieve is determined and used to calculate said "mass based average particle size":

$$d_{av} = \sum d_i \,.\, m_i$$

with $d_i$ = (upper size limit of bran fraction i + lower limit of bran fraction i)/2 and $m_i$ = mass fraction, i.e. mass on sieve i/sum of masses of all fractions.

Regular wheat bran (1687 μm) and wheat bran with average particle sizes of 1195 μm, 520 μm, 278 μm, 149 μm and 77 μm are used in the experiments disclosed by the present invention.

The terms 'to reduce colonization of bacteria belonging to the genus *Salmonella* in the gut of an animal' relates to the fact that the specific bran fraction of the present invention -when administered to animals infected with *Salmonella*-significantly (i.e. $p \leq 0.05$) decreases the number of colony forming units (CFU) per gram gut of said animal.

The term 'genus *Salmonella'* relates to the well-known bacterial genus *Salmonella* which comprises -for example- the well-known species *Salmonella enteritidis* (which is also described as *'Salmonella enterica* subspecies *enterica* serovar *Enteritidis'* (see for example Wisner et al. Microbiology 2010: 2770-2781) which -in its turn-comprises -for example- the strain *Salmonella enteritidis* phage type 4 strain 147 (SE147) as previously described [21].

The term 'animal' relates in principle to any animal which can be infected by *Salmonella* and can be or is consumed by humans. The term specifically relates to poultry or any domesticated birds such as -but not limited to-chickens, ducks, geese, turkeys and quail, but also relates to pigs, wild-boar and others. The term 'animal' further specifically relates to Broiler chickens (*Gallus gallus domesticus*), or broilers, that are a gallinaceous domesticated fowl, bred and raised specifically for meat production. Typical broilers have white feathers and yellowish skin. Most commercial broilers reach slaughter-weight at between five and seven weeks, or at a minimum of eight weeks with regard to the so-called 'slow growing broilers', of age. Because the meat broilers are this young at slaughter, their behavior and physiology are that of an immature bird.

Hence, the present invention further relates to a wheat bran fraction as indicated wherein said mass based average particle size is 278 μm.

Moreover, the present invention relates to a wheat bran fraction as indicated above wherein said animal is a chicken, and more specifically wherein said chicken is a broiler.

The present invention further relates to a wheat bran fraction as indicated above wherein said bacteria belong to the species *Salmonella enteritidis.*

The present invention further relates to a wheat bran fraction as indicated above wherein said gut is the cecum as the cecum is a specific part of the animal's gut where most fermentation of the wheat bran fraction of the present invention occurs.

Examples

Materials and Methods

Bacterial strains.

The streptomycin resistant *Salmonella enteritidis* phage type 4 strain 147 (SE147) was used in both *in vivo* and *in vitro* experiments. This strain was originally isolated from egg white and is known to colonize the chicken gut and internal organs to a high extent [27].

Modified wheat bran fractions.

The particle size of wheat bran was reduced as described previously [26]. In short, commercial wheat bran (Dossche Mills, Deinze, Belgium) was reduced in particle size with a Cyclotec 1093 Sample mill (FOSS, Höganäs, Sweden). By changing the grinding ring and/or the mesh size of the final sieve of the mill, bran fractions with differing particle sizes were obtained. The particle size distribution of the resulting fractions was determined by sieving 20.0 g of bran on a set of sieves with mesh sizes of 4500, 2000, 1000, 710, 500, 400, 250, 200, 160, 125, 112, 90, 50, and 38 μm. The set of sieves was shaken for 30 min at a frequency of 1.5 with a retch Vibratory Sieve Shaker (Aartselaar, Belgium) and each sieve was gently brushed to avoid clogging of the sieve pores. The mass of the bran that remained on each sieve was determined and used to calculate a mass based average particle size:

$$d_{av} = \sum d_i \,.\, m_i$$

with $d_i$ = (upper size limit of bran fraction i + lower limit of bran fraction i)/2 and $m_i$ = mass fraction, i.e. mass on sieve i/sum of masses of all fractions.

Regular wheat bran (1687 μm) and wheat bran with average particle sizes of 1195 μm, 520 μm, 278 μm, 149 μm and 77 μm were used in the experiments described below.

Animals.

One-day-old Ross 308 broilers were obtained from a local hatchery and housed in containers on wood shavings. A commercial standard basis ration and drinking water were provided *ad libitum.* Experiments were performed with the permission of the Ethical Committee of the Faculty of Veterinary Medicine, Ghent University, Belgium (EC 2014/76 & EC 2014/146).

The nutrient composition of the administered feed was the following:

| Nutrient composition | |
|---|---|
| Crude protein | 21.0% |
| Crude fat | 6.0% |
| Crude ash | 5.5% |
| Crude fibre | 3.0% |
| Lysine | 1.17% |
| methionine | 0.52% |
| Calcium | 0.85% |
| Phosphorus | 0.58% |
| Sodium | 0.15% |

Experiment 1: The effect of wheat bran with different average particle sizes in a *Salmonella* infection model.

To evaluate the effect of the average particle size of wheat bran on the colonization of *Salmonella* in chickens, 210 one-day-old chicks were divided into 7 groups of 30 animals. The feed of each group was supplemented with one percent of the different wheat bran fractions, i.e. unmodified bran (1687 μm) or bran with average reduced particle size of 1195 μm, 520 μm, 275 μm, 149 μm or 77 μm. The control group received non-supplemented feed. At the age of 10 days, 20 chickens per group were given $10^6$ CFU of the SE147 challenge strain by oral gavage. The remaining 10 chickens in each group were euthanized to collect cecal contents in order to determine the number of butyric acid producing bacteria present. Shedding of the SE147 challenge strain was monitored by taking cloacal swabs on day 1 post infection (dpi+1) and dpi+3. On dpi+4 the chickens were euthanized and *Salmonella* counts in cecum were determined. Cloacal swabs were also collected on dpi-1 to ensure that all chickens were *Salmonella* negative prior to experimental infection.

Experiment 2: Confirmation of the effects of a wheat bran fraction with an average reduced particle size of 278 μm in a *Salmonella* seeder bird infection model

A seeder bird model was used to evaluate the effect of bran with reduced particle size on *Salmonella* infection in broilers. Seeder bird models allow the infection to spread in a more natural way. One hundred eighty one-day-old chicks were divided into 3 groups of 60 animals. The feed of the animals in the treatment groups was supplemented with 1% unmodified wheat bran (1687 μm) or 1% wheat bran with an average reduced particle size of 278 μm. The control group received non-supplemented feed. On day 10, 12 chickens in each group (one chicken out of five) received $10^8$ CFU of the *Salmonella enteritidis* SE147 challenge strain by oral gavage. These seeder birds were marked using leg rings in order to be able to distinguish them from non-seeder birds. Shedding of the SE147 challenge strain was monitored by collecting cloacal swabs on days dpi+1, dpi+3, dpi+8, dpi+15, dpi+22 and dpi+29. Cloacal swabs were also collected prior to inoculation to verify whether none of the animals was already infected with *Salmonella* prior to onset of the experiment. On day dpi+4, dpi+18 and dpi+32, 20 chickens were euthanized in each group and Salmonella counts in cecum were determined.

Bacteriological analysis.

Cloacal swabs were directly inoculated on Xylose Lysine Deoxycholate agar (XLD, Oxoid, Basingstoke, England) plates supplemented with 100 μg/ml streptomycin (Sigma-Aldrich, St. louis, MO, USA). Negative samples were pre-enriched in buffered-peptone water (BPW, Oxoid, Basingstoke, England) overnight at 37°C. One ml of this suspension was enriched by adding 9 ml of tetrathionate-brilliant green broth (Merck, Darmstadt, Germany). After another overnight incubation period at 37°C the suspension was plated onto XLD supplemented with 100 μg/ml streptomycin.

Cecal samples were diluted 10 times and homogenized in BPW, after which 10-fold dilutions were made in phosphate-buffered saline (PBS). For each dilution, 6 droplets were plated onto XLD plates supplemented with 100 μg/ml streptomycin. These plates were then incubated overnight at 37°C. The number of CFU/g tissue was determined by counting the number of colonies on the plates. Samples negative after direct plating were enriched as described above. Samples negative after direct plating but positive after enrichment were assumed to contain 1 x $10^1$ CFU/g cecum. Samples negative after enrichment were considered to be negative. Salmonella counts were log transformed. Statistical analysis was done with SPSS Statistics 23 (IBM Corp, New York, United States), using a Kruskall-Wallis test to determine statistical differences in the number of *Salmonella* positive cloacal swabs and cecal Salmonella counts between groups.

qPCR analysis to quantify butyryl-CoA:acetate-CoA transferase gene copies.

DNA was extracted from cecal contents using the CTAB method as described previously [28]. Subsequently, qPCR was used to quantify the number of total bacteria and butyryl-CoA:acetate-CoA transferase genes in the samples using the respective primer pairs: Uni 331F (5'-TCCTACGGGAGGCAGCAGT-3') (SEQ ID N° 1), Uni 797R (5'-GGACTAACCAGGGTATCTAATCCTGTT-3') (SEQ ID N° 2) [29] and BCoATscrF (5'-GCIGAICATTTCACITGGAAYWS-3') (SEQ ID N° 3), BCoATscrR (5'-CCTGCCTTTGCAATRTCIACRAANGC-3') (SEQ ID N° 4)[30] . Samples were amplified using a 2x SensimixTM SYBR No-ROX mix (Bioline, Kampenhout, Belgium) and analyzed with a CFX96 Biorad Detection System (Biorad, Nazareth-Eke, Belgium). Each reaction was performed in triplicate in a 12.0 μl total reaction mixture using 2.0 μl DNA (100 ng/μl) and 0.5 μM (total bacteria) or 2.5 μM (butyryl-CoA:acetate-CoA transferase) final primer concentration. The amplification program consisted of 1 cycle of 95°C for 10 min, followed by 40 cycles of 1 min at 94°C, 1 min at 53°C and 2 min at 60°C (total bacteria) and 1 cycle of 95 °C for 10 min, followed by 40 cycles of 95 °C for 30 s, 53 °C for 30 s, 72 °C for 30s (butyryl CoA:acetate-CoA transferase). A stepwise increase of the temperature from 55°C to 95°C (at 5s/0.5°C) was added to analyze melting curve data for confirmation of the specificity of the reactions. Gene copy numbers were expressed as log10 values per gram wet weight of feces. Statistical analysis was perfomed with SPSS Statistics 23 (IBM Corp, New York, United States), using a Kruskall-Wallis test to determine statistical differences in log copy numbers of total Bacteria and butyryl-CoA:acetate-CoA transferase genes among groups.

*In vitro* digestion and fermentation.

The different wheat bran fractions were predigested *in vitro* using a protocol previously described by Wu et al., (2004) which was slightly adapted [31]. First, 1 g substrate was incubated with 1.5 ml 0.03 M HCl (40°C for 30 min.) to mimic the initial stages of digestion in the crop. Secondly, the digestion in the proventriculus and gizzard was simulated by incubating the substrate with 3000 U of pepsin in 1 ml 1.5 M HCl (40°C for 45 min.). To simulate digestion in the duodenum, 1 ml 1M $NaHCO_3$ and 3.7 mg pancreatin were added (2h at 40°C). Subsequently the predigested bran fractions were centrifuged (5 min., 5000xg) and washed twice with 20 ml of aqua dest. The resulting pellet was retained and lyophilized. The *in vitro* fermentations were performed using a nutrient-poor medium described by Moura et al. (2007) with minor modifications, previously described by De Maesschalck et al. (2015) [32, 33]. The pH of the medium was adjusted to 6.0. The cecum of 4-week old Ross 308 broilers was isolated and brought immediately into an anaerobic cabinet (Ruskinn technology, Bridgend, United Kingdom) with 84% $N_2$, 8% $H_2$ and 8% $CO_2$ at 37°C. The lyophilized predigested fractions were supplemented to the nutrient-poor medium to a concentration of 1% (w/v). Non-supplemented medium was used as a control. After 24h anaerobic incubation at 37°C, the supernatant was collected after centrifugation (4575 rpm, 10 min.). The experiment was repeated three times using cecal contents obtained from three different chickens.

SCFA quantification.

The method previously described by De Weirdt el al. (2010) was used to quantify the amounts of butyric, propionic and acetic acid [34]. In short, SCFA were extracted from the samples using diethyl ether. Methyl hexanoic acid was added as internal standard. The extracts were analyzed using a GC-2014 gas chromatograph (Shimadzu,'s-Hertogenbosch, the Netherlands), equipped with a capillary fatty acid-free EC-1000 Econo-Cap column (dimensions: 25mm x 0.53 mm, film thickness 1.2 mM; Alltech, Laarne, Belgium), a flame ionization detector and a split injector. The injection volume was 1 μL and the temperature profile was set from 110 to 160°C, with a temperature increase of 6 °C/min. The carrier gas was nitrogen and the temperature of the injector and detector were 100 and 220 °C, respectively. Statistical analysis was carried out with SPSS Statistics 23, using a one factor ANOVA with Tukey post-hoc test.

Measurement of *hilA* expression.

To determine the expression of the *hilA* gene, the promotor of *hilA* was cloned in front of *luxCDABE* genes. The production of light is proportional to the expression level of the gene, which was determined relatively to the expression of the housekeeping gene *rpsM.* The construction of a *Salmonella* strain carrying a *hilA-lux* promoter fusion was performed as described previously [35]. A *rpsM* promoter fusion was constructed similarly by using *rpsM* specific primers NNNNCTCGAGATCGTTAAGCGTGATGG (SEQ ID N° 5)/ NNNNGGATCCCGACACCGTAGATCGAAG (SEQ ID N° 6) for the initial amplification of the *rpsM* promoter sequence. This resulted in cloning a sequence 214 bp upstream from the *rpsM* start codon containing *rpsM* promoter into pCS26, upstream from the lux reporter genes.

To quantify light production by a SE147 strain carrying plasmids either containing *hilA-luxCDABE* or *rpsM-luxCDABE* transcriptional fusions, a Fluoroscan Ascent fluorometer (Lab-Systems, Helsinki, Finland) was used. Overnight cultures of SE147 carrying either of the reporter fusion constructs were diluted 1:100 in LB medium, supplemented with supernatant (1:1) derived from the different *in vitro* fermentation reactions. As a control, LB was supplemented with supernatant (1:1) derived from the control fermentation. Subsequently the diluted bacterial cultures were grown in microplates at 37°C. Light production was measured automatically every 15 min during 15 hours. Statistical analysis was carried out with SPSS Statistics 23, using a two factor ANOVA with chicken as random factor.

Invasion assay.

Cells of the human colon carcinoma cell line T84 were seeded in 96-well cell culture plates at a density of 5 x $10^5$ cells/ml culture medium (Dulbecco's modified Eagle's medium (DMEM), 10% fetal calf serum (FCS), and 2% L-glutamine) and grown for 24 hours at 37°C and 5% $CO_2$. Bacterial cultures were grown overnight at 37°C, after which they were diluted 1:100 in LB medium supplemented with supernatant (1:1) obtained from the different fermentation reactions. After 16 hours the bacterial cultures were centrifuged and the LB medium was replaced by cell medium (DMEM, 10% FCS, 2% L-glutamine) without antibiotics. The suspensions were diluted to a density of $10^6$ CFU/ml. Two hundred μl of these dilutions was transferred onto the cells. Bacterial cells and human cells were brought into contact by centrifugation (10 min., 1500 rpm) and incubated together at 37°C and 5% $CO_2$. After 1 hour the T84 cells were rinsed 3 times with Hanks' Balanced Salt Solution (HBSS, Life Technologies, Paisley, Scotland). Cell medium with 100 μg/ml gentamycin was added and the plates were incubated again for 1 hour at 37°C and 5% $CO_2$. Next, the cells were rinsed 5 times with HBSS (Life Technologies, Paisley, Scotland) and lysed with 0.2% sodium deoxycholate (Sigma) in distilled water. The number of colony forming units (CFU)/ml was determined by plating 6 x 20 μl of a 10-fold dilution series of the suspensions onto XLD agar plates. Invasion was calculated as the percent invaded bacteria relative to the initial number of inoculated bacteria. Statistical analysis was carried out with SPSS Statistics 23, using a two factor ANOVA with chicken as random factor.

Results

Wheat bran with average reduced particle size of 278 μm reduces cecal colonization by *Salmonella enteritidis* SE147

During this experiment, broiler chickens were fed diets supplemented with 1% of different wheat bran fractions and were experimentally infected with *Salmonella enteritidis.* Before challenge infection all chickens tested negative for *Salmonella.* On dpi+1 and dpi+3 cloacal swabs were collected to monitor shedding. All groups shed *Salmonella enteritidis* to similar levels during the experiment, as no statistical differences could be observed between the different groups (Table 1). On dpi+4, all remaining animals were euthanized and Salmonella counts in the cecum were determined. Animals fed wheat bran with reduced particle size of 278 μm, displayed a significantly lower cecal colonization compared to the control group ($p=0.036$) and the group receiving bran with reduced particle size of 520 μm ($p=0.003$). In general, a higher number of *Salmonella* negative caeca could be found in groups fed bran with smaller particle sizes (278 μm, 149 μm and 77 μm) (Figure 2).

Prior to the challenge infection, 10 animals per group were randomly selected and euthanized. Their ceca were sampled and the total number of Bacteria and butyryl-CoA:acetate-CoA transferase genes were quantified. No significant difference in the number of total Bacteria could be found between the different groups. On the other hand, the number of butyryl-CoA:acetate-CoA transferase gene copies was significantly increased in the group that received bran with particle size of 278 μm compared to bran with particle size of 520 μm ($p=0.003$), 149 μm ($p=0.007$) and 77 μm ($p=0.03$) (Figure 3).

**Table 1**. Fecal shedding of *Salmonella enteritidis* strain SE147 after experimental infection of broilers fed a diet containing different wheat bran fractions. Chickens were orally inoculated with $10^6$ CFU of *Salmonella enteritidis* strain SE147 when they were 10 days old. Cloacal swabs were collected at days dpi-1, dpi+1 and dpi+3. The percentages of swabs positive for positive for the Salmonella *enteritidis* SE147 challenge strain are shown between brackets.

| | dpi-1 | dpi+1 | dpi+3 |
|---|---|---|---|
| Control | 0/20 | 5/20 (25.0%) | 8/20 (40.0%) |
| 1687 μm | 0/20 | 7/20 (35.0%) | 11/18 (61.1%) |
| 1195 μm | 0/20 | 7/20 (35.0%) | 6/19 (31.6%) |
| 520 μm | 0/20 | 2/20 (10.0%) | 4/19 (21.1%) |
| 278 μm | 0/20 | 4/20 (20.0%) | 6/19 (31.6%) |
| 149 μm | 0/20 | 8/20 (40.0%) | 6/20 (30.0%) |
| 77 μm | 0/20 | 6/20 (30.0%) | 6/19 (31.6%) |

**Table 2**. Proportion of *Salmonella* positive animals on dpi+4. All chickens (n=20) were inoculated with $10^6$ CFU *Salmonella enteritidis* (SE147) on day 10 of the experiment. On dpi+4, the chickens were euthanized and Salmonella counts in cecum were determined. Significant differences among groups are indicated with different letters ($^a$, $^b$) with $0.01 < p \leq 0.05$.

| | *Salmonella* positive caeca (dpi+4) |
|---|---|
| Control | 20/20 (100%)$^a$ |
| 1687 μm | 16/18 (88.9%) |
| 1195 μm | 16/19 (84.2%) |
| 520 μm | 18/19 (94.7%) |
| 278 μm | 11/19 (57.9%)$^b$ |
| 149 μm | 15/20 (75.0%) |
| 77 μm | 13/19 (68.4%) |

Experiment 2: Confirmation of the effects of wheat bran with an average reduced particle size of 278 μm in a *Salmonella* seeder bird infection model.

Shedding of *Salmonella* was monitored by collecting cloacal swabs on dpi-1, dpi+1, dpi+3, dpi+8, dpi+15, dpi+22 and day dpi+29. On dpi+3 and dpi+8, animals fed bran with reduced particle size (278 μm, shed significantly less of the *Salmonella* challenge strain than the group receiving unmodified bran (1687 μm) (p=0.0001; p=0.0027, respectively). In addition, on dpi+8, animals receiving bran of 278 μm shed significantly less compared to the control group (p=0.0006) (Table 3). On dpi+4, dpi+18 and dpi+32, 20 chickens were euthanized per group and *Salmonella* counts in cecum were determined by bacteriological analysis. On dpi+4, the number of *Salmonella* bacteria present in the cecal contents was significantly lower in the group of animals receiving bran with reduced particle size (278 μm) when compared to the control group (p= 0.034) and the group receiving unmodified bran (1687 μm) (p=0.022). On dpi+18 and dpi+32 no such differences could be observed.

**Table 3**. Fecal shedding of *Salmonella enteritidis* strain SE147 after experimental infection of broilers fed with different wheat bran fractions. One chicken out of five was inoculated with $10^8$ CFU of *Salmonella enteritidis* SE147 when they were 10 days old. Cloacal swabs were collected on dpi-1, dpi+1, dpi+3, dpi+8, dpi+15, dpi+22 and dpi+29. The percentage of swabs positive for the *Salmonella enteritidis* SE147 challenge strain are shown between brackets. Significant differences among groups within one sampling day are indicated with different letters ([a], [b]) with p< 0.001.

| | dpi-1 | dpi+1 | dpi+3 | dpi+8 | dpi+15 | dpi+22 | dpi+29 |
|---|---|---|---|---|---|---|---|
| Control | 0/60 | 15/60 (25.0%) | 16/59 (27.1%) | 23/40 (57.5%)[a] | 20/40 (50.0%) | 7/19 (36.8%) | 6/19 (31.6%) |
| 1687 μm | 0/60 | 19/60 (31.7%) | 31/60 (51.1%)[a] | 21/40 (52.5%)[a] | 27/39 (69.2%) | 8/20 (40.0%) | 3/19 (15.8%) |
| 278 μm | 0/60 | 8/60 (13.3%) | 11/60 (18.3%)[b] | 8/40 (20.0%)[b] | 25/40 (62.5%) | 10/20 (50.0%) | 6/20 (30.0%) |

*In vitro* fermentation of wheat bran with reduced particle size leads to an increased SCFA production
Wheat bran fractions with an average particle size of 278 and 1687 μm were fermented in a basal medium for 24h using chicken cecal contents. Afterwards the supernatant was collected in order to quantify the amounts of acetic, propionic and butyric acid produced. The fermentation of unmodified bran (1687 μm) and bran with reduced particle size (278 μm) resulted in higher amounts of total short chain fatty acids when compared to the control fermentation (p=0.008, p=0.001 respectively). In addition, fermentation of bran with reduced particle size (278 μm) resulted in significantly higher levels of SCFA compared to the unmodified fraction (1687 μm) (p=0.042) (Figure 5 A).

Both the fermentation of unmodified bran (1687 μm) and the particle size reduced fraction (278 μm) resulted in the production of significantly more butyric acid (p=0.004, p=0.001 respectively) compared to the control fermentation (Figure 5 D). The fermentation of bran with average particle size of 278 μm resulted in a significantly higher concentration of acetic acid compared to the control fermentation (p=0.04). No significant differences could be found for propionic acid.

Fermentation products of wheat bran with reduced particle size of 278 μm downregulate *hilA* expression
Stationary *Salmonella enteritidis* (SE147) cultures carrying a plasmid containing either *hilA-luxCDABE* or *rpsM-luxCDABE* transcriptional fusions were diluted in LB medium supplemented with supernatant (1:1) derived from the fermentation in which respectively, no bran (control), unmodified bran (1687 μm) or bran with reduced particle size (278 μm) was added. Two effects could be observed. First, bacteria grown in the presence of fermentation products derived from unmodified bran (1687 μm) or particle size reduced bran (278 μm) showed a reduced *hilA* expression (p=0.02, p<0.001 respectively) compared to the control. In addition, bacteria grown in the presence of fermentation products derived from bran with reduced particle size (278 μm) showed a significant decrease in *hilA* expression when compared to the SE147 strain grown in the presence of fermentation products derived from unmodified bran (1687 μm) (p=0.002) (Figure 6).

Invasion in epithelial cells is reduced *in vitro* when *Salmonella* is pretreated with fermentation products derived from wheat bran with reduced particle size
In order to investigate the effect of a diet supplemented with different wheat bran fractions on the ability of *Salmonella enteritidis* to invade host cells, an invasion assay was performed using *Salmonella enteritidis* cultures exposed fermentation products derived from unmodified bran (1687 μm), bran with an average reduced particle size of 278 μm, or control fermentation products. Bran size had a significant effect on the percentage of invaded bacteria as pretreatment with fermentation products derived from bran with reduced particle size (278 μm) resulted in a relative reduction in percentage invasion of 63% (p=0.019) when compared to the invasion of *Salmonella* pretreated with products obtained from the control fermentations. Pretreatment with fermentation products derived from bran with average reduced particle size of 278 μm resulted in a relative reduction in percentage invasion of 36% (p=0.002) in invasion, compared to *Salmonella* pretreated with products obtained from the fermentation of unmodified bran (1687 μm) (Figure 7).

References

1. Verspreet, J., et al., A Critical Look at Prebiotics Within the Dietary Fiber Concept. Annu Rev Food Sci Technol, 2016. 7: p. 167-90.
2. Stewart, M.L. and J.L. Slavin, Particle size and fraction of wheat bran influence short-chain fatty acid production in vitro. Br J Nutr, 2009. 102(10): p. 1404-7.
3. Johnson, I.T., New food components and gastrointestinal health. Proc Nutr Soc, 2001. 60(4): p. 481-8.
4. Guillon, F. and M. Champ, Structural and physical properties of dietary fibres, and consequences of processing on human physiology. Food Research International, 2000. 33(3-4): p. 233-245.
5. Moers, K., et al., Endoxylanase substrate selectivity determines degradation of wheat water-extractable and water-unextractable arabinoxylan. Carbohydr Res, 2005. 340(7): p. 1319-27.
6. Kumar, V., et al., Dietary roles of non-starch polysaccharides in human nutrition: a review. Crit Rev Food Sci Nutr, 2012. 52(10): p. 899-935.
7. Jones, J.M., CODEX-aligned dietary fiber definitions help to bridge the 'fiber gap'. Nutr J, 2014. 13: p. 34.
8. Roland, N., et al., Comparative study of the fermentative characteristics of inulin and different types of fibre in rats inoculated with a human whole faecal flora. Br J Nutr, 1995. 74(2): p. 239-49.
9. FAO. Carbohydrates in Human Nutrition (FAO food and nutrition paper-66). in Rep. Joint FAO/WHO expert consultation. April 14-18, 1997. Rome.
10. Nyman, M., et al., Fermentation of dietary fibre in the intestinal tract: comparison between man and rat. Br J Nutr, 1986. 55(3): p. 487-96.
11. Nagy-Szakal, D., et al., Cellulose supplementation early in life ameliorates colitis in adult mice. PLoS One, 2013. 8(2): p. e56685.
12. Brotherton, C.S., et al., A high-fiber diet may improve bowel function and health-related quality of life in patients with Crohn disease. Gastroenterol Nurs, 2014. 37(3): p. 206-16.
13. Hamer, H.M., et al., Review article: the role of butyrate on colonic function. Aliment Pharmacol Ther, 2008. 27(2): p. 104-19.
14. Peng, L., et al., Effects of butyrate on intestinal barrier function in a Caco-2 cell monolayer model of intestinal barrier. Pediatr Res, 2007. 61(1): p. 37-41.
15. Leitch, E.C.M., et al., Selective colonization of insoluble substrates by human faecal bacteria. Environmental Microbiology, 2007. 9(3): p. 667-679.
16. Stevenson, L., et al., Wheat bran: its composition and benefits to health, a European perspective. International Journal of Food Sciences and Nutrition, 2012. 63(8): p. 1001-1013.
17. Maes, C. and J.A. Delcour, Alkaline hydrogen peroxide extraction of wheat bran non-starch polysaccharides. Journal of Cereal Science, 2001. 34(1): p. 29-35.
18. Akhtar, M., et al., Studies on wheat bran Arabinoxylan for its immunostimulatory and protective effects against avian coccidiosis. Carbohydr Polym, 2012. 90(1): p. 333-9.
19. Maes, C. and J.A. Delcour, Structural Characterisation of Water-extractable and Water-unextractable Arabinoxylans in Wheat Bran. Journal of Cereal Science, 2002. 35(3): p. 315-326.
20. Eeckhaut, V., et al., Arabinoxylooligosaccharides from wheat bran inhibit Salmonella colonization in broiler chickens. Poult Sci, 2008. 87(11): p. 2329-34.
21. Santos, F.B., et al., Influence of housing system, grain type, and particle size on Salmonella colonization and shedding of broilers fed triticale or corn-soybean meal diets. Poult Sci, 2008. 87(3): p. 405-20.
22. The 2013 joint ECDC/EFSA report on trends and sources of zoonoses, zoonotic agents and food-borne outbreaks published. Euro Surveill, 2015. 20(4).
23. Van Immerseel, F., et al., The use of organic acids to combat Salmonella in poultry: a mechanistic explanation of the efficacy. Avian Pathol, 2006. 35(3): p. 182-8.
24. Higgins, J.P., et al., Effect of lactic acid bacteria probiotic culture treatment timing on Salmonella Enteritidis in neonatal broilers. Poult Sci, 2010. 89(2): p. 243-7.
25. De Cort, W., et al., A Salmonella Enteritidis hilAssrAfliG deletion mutant is a safe live vaccine strain that confers protection against colonization by Salmonella Enteritidis in broilers. Vaccine, 2013. 31(44): p. 5104-10.
26. Jacobs, P.J., et al., Study of hydration properties of wheat bran as a function of particle size. Food Chemistry, 2015. 179: p. 296-304.
27. Methner, U., S. Alshabibi, and H. Meyer, Experimental Oral Infection of Specific Pathogen-free Laying Hens and Cocks with Salmonella Enteritidis strains. Journal of Veterinary Medicine Series B-Zentralblatt Fur Veterinarmedizin Reihe B-Infectious Diseases and Veterinary Public Health, 1995. 42(8): p. 459-469.
28. Griffiths, R.I., et al., Rapid method for coextraction of DNA and RNA from natural environments for analysis of ribosomal DNA- and rRNA-based microbial community composition. Applied and Environmental Microbiology, 2000. 66(12): p. 5488-5491.
29. Hopkins, M.J., et al., Characterisation of intestinal bacteria in infant stools using real-time PCR and northern hybridisation analyses. Fems Microbiology Ecology, 2005. 54(1): p. 77-85.
30. Louis, P. and H.J. Flint, Development of a semiquantitative degenerate real-time PCR-based assay for estimation of numbers of butyryl-coenzyme A (CoA) CoA transferase genes in complex bacterial samples. Applied and Environmental Microbiology, 2007. 73(6): p. 2009-2012.
31. Wu, Y.B., et al., Influence of Three Phytase Preparations in Broiler Diets Based on Wheat or Corn: In vitro Measurements of Nutrient Release. International Journal of Poultry Science, 2004. 3(7): p. 450-455.
32. Moura, P., et al., In vitro fermentation of xylo-oligosaccharides from corn cobs autohydrolysis by Bifidobacterium and Lactobacillus strains. Lwt-Food Science and Technology, 2007. 40(6): p. 963-972.
33. De Maesschalck, C., et al., Effects of Xylo-Oligosaccharides on Broiler Chicken Performance and Microbiota. Applied and Environmental Microbiology, 2015. 81(17): p. 5880-5888.
34. De Weirdt, R., et al., Human faecal microbiota display variable patterns of glycerol metabolism. Fems Microbiology Ecology, 2010. 74(3): p. 601-611.
35. Van Immerseel, F., et al., Medium-chain fatty acids decrease colonization and invasion through hilA suppression shortly after infection of chickens with Salmonella enterica serovar enteritidis. Applied and Environmental Microbiology, 2004. 70(6): p. 3582-3587.
36. Mikkelsen et al. Effects of physical properties of feed on microbial ecology and survival of Salmonella enterica serovar typhimurium in the pig gastrointestinal tract. Applied and environmental microbiology, 2004. 70 (6): p. 3485-3492.
37. Martin-Pelaez et al. Different fibrous ingredients and coarsely ground maize affect hindgut fermentation in the pig in vitro but not Salmonella typhimurium survival. Animal feed science and technology, 2009. 153 (1-2): p. 141-152.
38. Eeckhaut et al. Arabinoxylooligosaccharides form wheat bran inhibit Salmonella colonization in broiler chickens. Poultry Science, 2008. 87 (11): p. 2329-2334.
39. Dziedzic Krzysztof et al. Effect of wheat dietary fiber particle size during digestion in vitro on bile acid, faecal bacteria and short chain fatty acid content. Plant foods for human nutrition, 2016. 71 (2): p. 151-157.

## Claims

1. A wheat bran fraction with a mass based average particle size ranging between 273 and 283 μm for use to a reduce colonization of bacteria belonging to the genus *Salmonella* in the gut of an animal.

2. A wheat bran fraction for use according to claim 1 wherein said mass based average particle size is 278 μm.

3. A wheat bran fraction for use according to claims 1-2 wherein said animal is a chicken.

4. A wheat bran fraction for use according to claim 3 wherein said chicken is a broiler.

5. A wheat bran fraction for use according to claims 1-4 wherein said bacteria belong to the species *Salmonella enteritidis.*

6. A wheat bran fraction for use according to claims 1-5 wherein said gut is the cecum.

## Patentansprüche

1. Weizenkleiefraktion mit einer massenbezogenen durchschnittlichen Teilchengröße im Bereich zwischen 273 und 283 μm zur Verwendung bei der Verminderung der Besiedlung von Bakterien der Gattung *Salmonella* im Darm eines Tieres.

2. Weizenkleiefraktion zur Verwendung nach Anspruch 1, wobei die massenbezogene durchschnittliche Teilchengröße 278 μm beträgt.

3. Weizenkleiefraktion zur Verwendung nach einem der Ansprüche 1-2, wobei es sich bei dem Tier um ein Huhn handelt.

4. Weizenkleiefraktion zur Verwendung nach Anspruch 3, wobei es sich bei dem Huhn um ein Masthuhn handelt.

5. Weizenkleiefraktion zur Verwendung nach einem der Ansprüche 1-4, wobei das Bakterium zu der Art *Salmonella enteritidis* gehört.

6. Weizenkleiefraktion zur Verwendung nach einem der Ansprüche 1-5, wobei es sich bei dem Darm um den Blinddarm handelt.

## Revendications

1. Fraction de son de blé comportant une grosseur moyenne de particule basée sur la masse dans la plage comprise entre 273 et 283 μm pour une utilisation pour une réduction de la colonisation de bactéries appartenant au genre *Salmonella* dans l'intestin d'un animal.

2. Fraction de son de blé pour une utilisation selon la revendication 1, ladite grosseur moyenne de particule basée sur la masse étant de 278 μm.

3. Fraction de son de blé pour une utilisation selon les revendications 1 et 2, ledit animal étant un poulet.

4. Fraction de son de blé pour une utilisation selon la revendication 3, ledit poulet étant un poulet de chair.

**5.** Fraction de son de blé pour une utilisation selon les revendications 1 à 4, lesdites bactéries appartenant à l'espèce *Salmonella enteritidis.*

**6.** Fraction de son de blé pour une utilisation selon les revendications 1 à 5, ledit intestin étant le caecum.

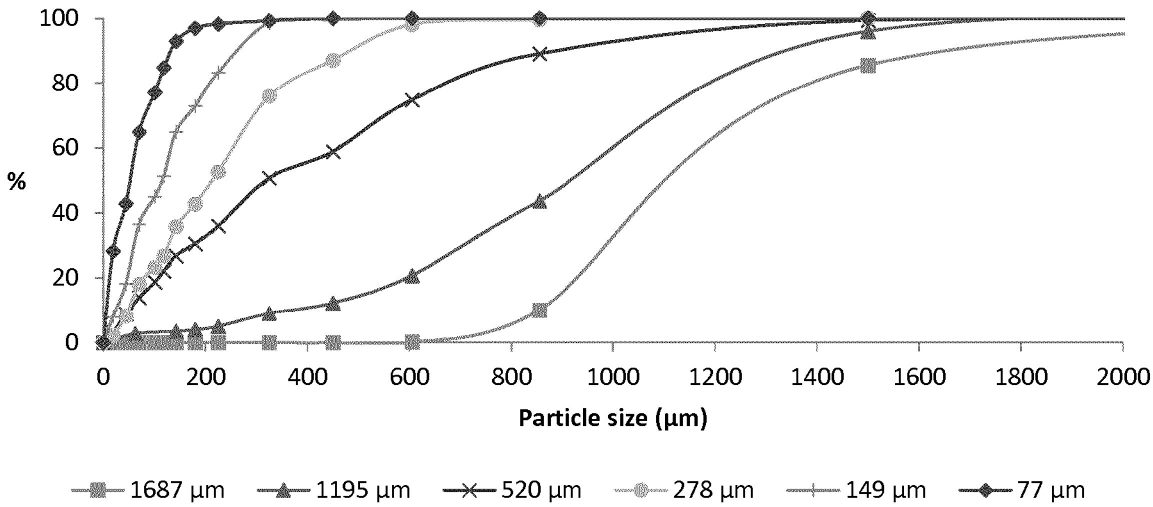
100
80
60
40
20
0
%
0
200
400
600
800
1000
1200
1400
1600
1800
2000
Particle size (µm)
1687 µm
1195 µm
520 µm
278 µm
149 µm
77 µm

Fig 1

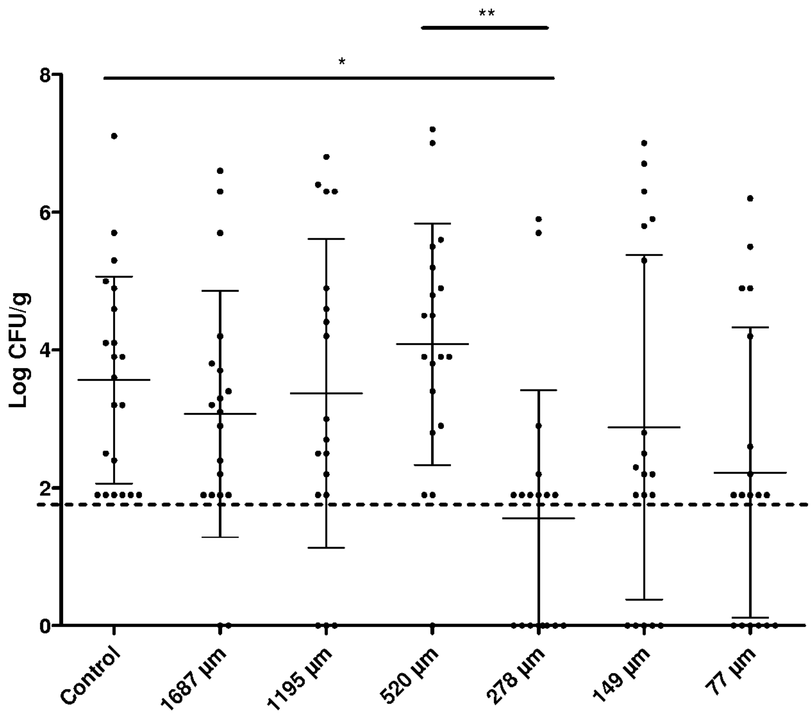
**
*
8
6
4
2
0
Log CFU/g
Control
1687 µm
1195 µm
520 µm
278 µm
149 µm
77 µm

Fig 2

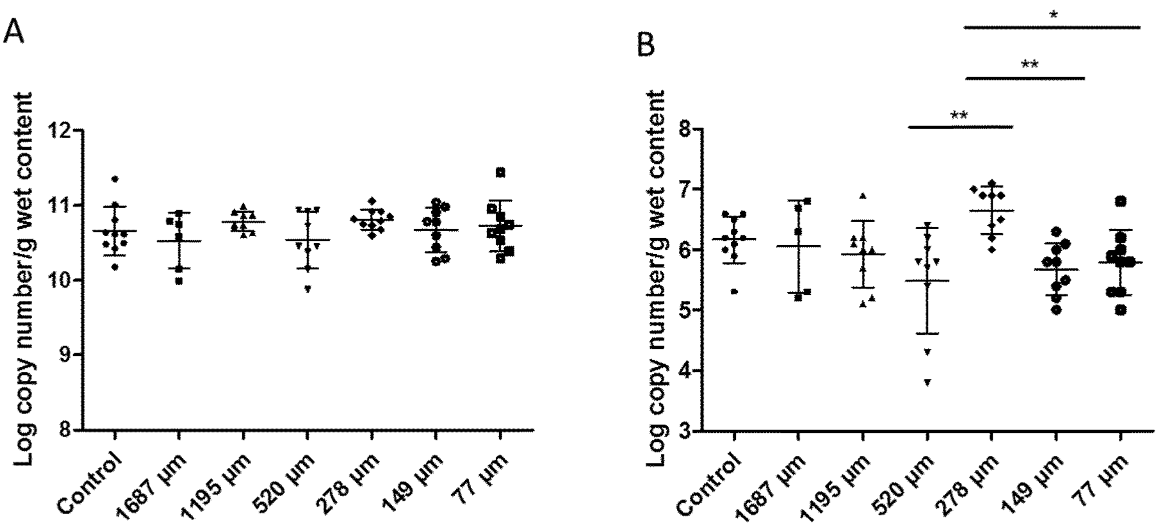
A
Log copy number/g wet content
12
11
10
9
8
Control
1687 µm
1195 µm
520 µm
278 µm
149 µm
77 µm
B
*
**
**
Log copy number/g wet content
8
7
6
5
4
3
Control
1687 µm
1195 µm
520 µm
278 µm
149 µm
77 µm

Fig 3

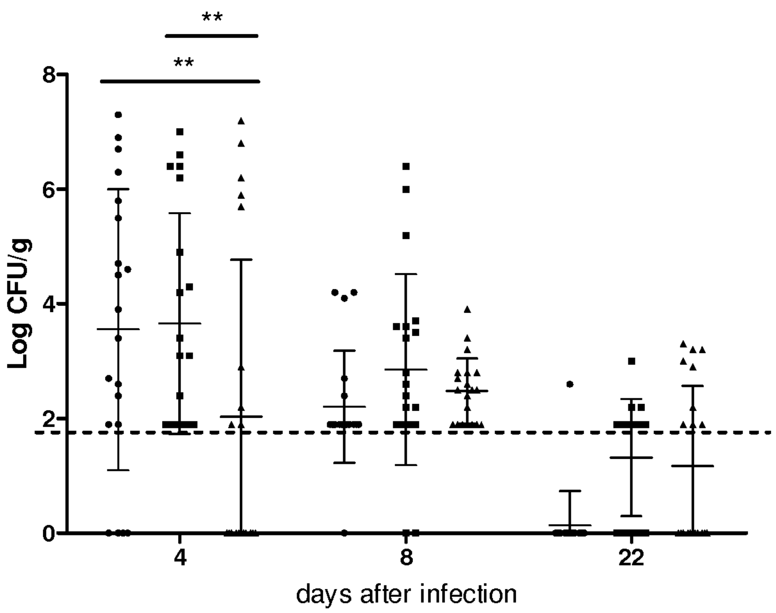


Fig4

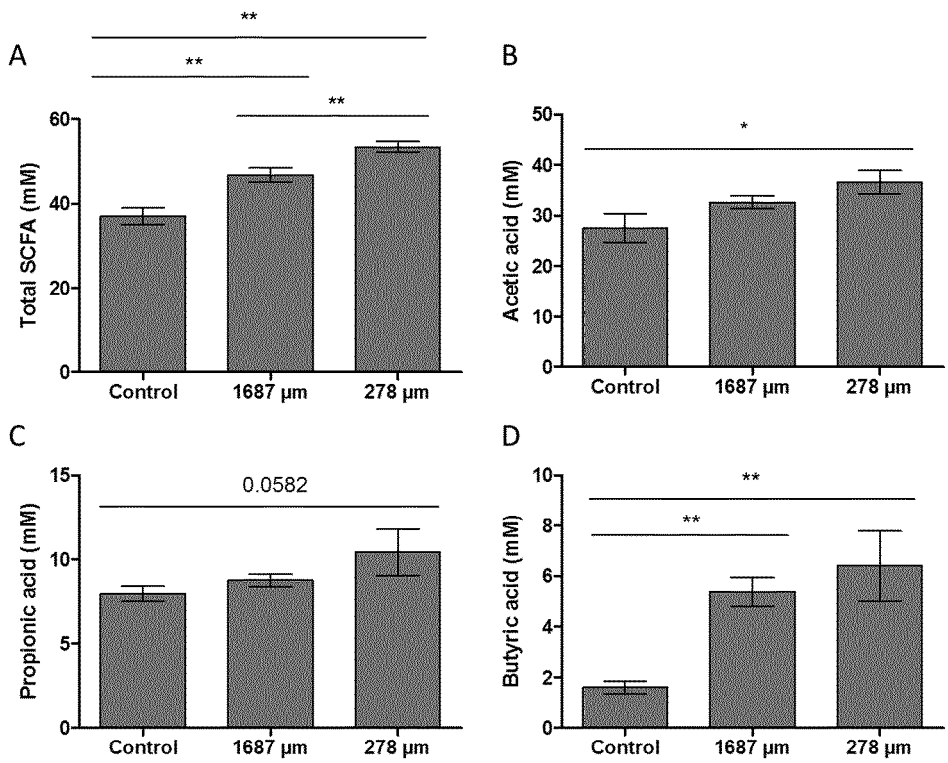
A
**
**
**
Total SCFA (mM)
60
40
20
0
Control
1687 µm
278 µm
B
*
Acetic acid (mM)
50
40
30
20
10
0
Control
1687 µm
278 µm
C
0.0582
Propionic acid (mM)
15
10
5
0
Control
1687 µm
278 µm
D
**
**
Butyric acid (mM)
10
8
6
4
2
0
Control
1687 µm
278 µm

Fig 5

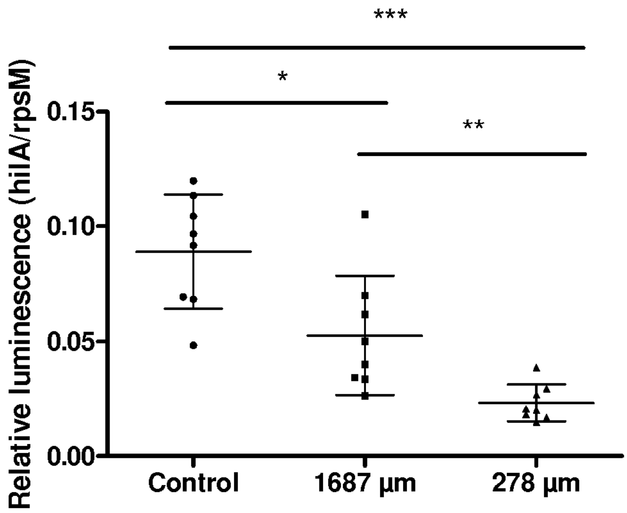
***
*
**
Relative luminescence (hilA/rpsM)
0.15
0.10
0.05
0.00
Control
1687 µm
278 µm

Fig 6

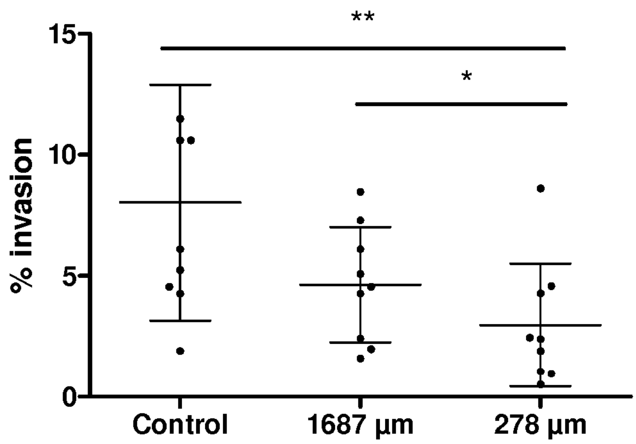


Fig 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005245205 B


### Non-patent literature cited in the description


- **WISNER et al.** *Microbiology,* 2010, 2770-2781
- **VERSPREET, J. et al.** A Critical Look at Prebiotics Within the Dietary Fiber Concept. *Annu Rev Food Sci Technol,* 2016, vol. 7, 167-90
- **STEWART, M.L. ; J.L. SLAVIN.** Particle size and fraction of wheat bran influence short-chain fatty acid production in vitro. *Br J Nutr,* 2009, vol. 102 (10), 1404-7
- **JOHNSON, I.T.** New food components and gastrointestinal health. *Proc Nutr Soc,* 2001, vol. 60 (4), 481-8
- **GUILLON, F. ; M. CHAMP.** Structural and physical properties of dietary fibres, and consequences of processing on human physiology. *Food Research International,* 2000, vol. 33 (3-4), 233-245
- **MOERS, K. et al.** Endoxylanase substrate selectivity determines degradation of wheat water-extractable and water-unextractable arabinoxylan. *Carbohydr Res,* 2005, vol. 340 (7), 1319-27
- **KUMAR, V. et al.** Dietary roles of non-starch polysaccharides in human nutrition: a review. *Crit Rev Food Sci Nutr,* 2012, vol. 52 (10), 899-935
- **JONES, J.M.** CODEX-aligned dietary fiber definitions help to bridge the 'fiber gap'. *Nutr J,* 2014, vol. 13, 34
- **ROLAND, N. et al.** Comparative study of the fermentative characteristics of inulin and different types of fibre in rats inoculated with a human whole faecal flora. *Br J Nutr,* 1995, vol. 74 (2), 239-49
- Carbohydrates in Human Nutrition (FAO food and nutrition paper-66). FAO, 14 April 1997
- **NYMAN, M et al.** Fermentation of dietary fibre in the intestinal tract: comparison between man and rat. *Br J Nutr,* 1986, vol. 55 (3), 487-96
- **NAGY-SZAKAL, D. et al.** Cellulose supplementation early in life ameliorates colitis in adult mice. *PLoS One,* 2013, vol. 8 (2), e56685
- **BROTHERTON, C.S. et al.** A high-fiber diet may improve bowel function and health-related quality of life in patients with Crohn disease. *Gastroenterol Nurs,* 2014, vol. 37 (3), 206-16
- **HAMER, H.M. et al.** Review article: the role of butyrate on colonic function. *Aliment Pharmacol Ther,* 2008, vol. 27 (2), 104-19
- **PENG, L. et al.** Effects of butyrate on intestinal barrier function in a Caco-2 cell monolayer model of intestinal barrier. *Pediatr Res,* 2007, vol. 61 (1), 37-41
- **LEITCH, E.C.M. et al.** Selective colonization of insoluble substrates by human faecal bacteria. *Environmental Microbiology,* 2007, vol. 9 (3), 667-679
- **STEVENSON, L et al.** Wheat bran: its composition and benefits to health, a European perspective. *International Journal of Food Sciences and Nutrition,* 2012, vol. 63 (8), 1001-1013
- **MAES, C. ; J.A. DELCOUR.** Alkaline hydrogen peroxide extraction of wheat bran non-starch polysaccharides. *Journal of Cereal Science,* 2001, vol. 34 (1), 29-35
- **AKHTAR, M. et al.** Studies on wheat bran Arabinoxylan for its immunostimulatory and protective effects against avian coccidiosis. *Carbohydr Polym,* 2012, vol. 90 (1), 333-9
- **MAES, C. ; J.A. DELCOUR.** Structural Characterisation of Water-extractable and Water-unextractable Arabinoxylans in Wheat Bran. *Journal of Cereal Science,* 2002, vol. 35 (3), 315-326
- **EECKHAUT, V. et al.** Arabinoxylooligosaccharides from wheat bran inhibit Salmonella colonization in broiler chickens. *Poult Sci,* 2008, vol. 87 (11), 2329-34
- **SANTOS, F.B. et al.** Influence of housing system, grain type, and particle size on Salmonella colonization and shedding of broilers fed triticale or corn-soybean meal diets. *Poult Sci,* 2008, vol. 87 (3), 405-20
- The 2013 joint ECDC/EFSA report on trends and sources of zoonoses, zoonotic agents and food-borne outbreaks published. *Euro Surveill,* 2015, vol. 20 (4
- **VAN IMMERSEEL, F. et al.** The use of organic acids to combat Salmonella in poultry: a mechanistic explanation of the efficacy. *Avian Pathol,* 2006, vol. 35 (3), 182-8

- **HIGGINS, J.P. et al.** Effect of lactic acid bacteria probiotic culture treatment timing on Salmonella Enteritidis in neonatal broilers. *Poult Sci,* 2010, vol. 89 (2), 243-7
- **DE CORT, W. et al.** A Salmonella Enteritidis hilAssrAfliG deletion mutant is a safe live vaccine strain that confers protection against colonization by Salmonella Enteritidis in broilers. *Vaccine,* 2013, vol. 31 (44), 5104-10
- **JACOBS, P.J. et al.** Study of hydration properties of wheat bran as a function of particle size. *Food Chemistry,* 2015, vol. 179, 296-304
- **METHNER, U. ; S. ALSHABIBI ; H. MEYER.** Experimental Oral Infection of Specific Pathogen-free Laying Hens and Cocks with Salmonella Enteritidis strains. *Journal of Veterinary Medicine Series B-Zentralblatt Fur Veterinarmedizin Reihe B-Infectious Diseases and Veterinary Public Health,* 1995, vol. 42 (8), 459-469
- **GRIFFITHS, R.I. et al.** Rapid method for coextraction of DNA and RNA from natural environments for analysis of ribosomal DNA- and rRNA-based microbial community composition. *Applied and Environmental Microbiology,* 2000, vol. 66 (12), 5488-5491
- **HOPKINS, M.J. et al.** Characterisation of intestinal bacteria in infant stools using real-time PCR and northern hybridisation analyses. *Fems Microbiology Ecology,* 2005, vol. 54 (1), 77-85
- **LOUIS, P. ; H.J. FLINT.** Development of a semiquantitative degenerate real-time PCR-based assay for estimation of numbers of butyryl-coenzyme A (CoA) CoA transferase genes in complex bacterial samples. *Applied and Environmental Microbiology,* 2007, vol. 73 (6), 2009-2012
- **WU, Y.B. et al.** Influence of Three Phytase Preparations in Broiler Diets Based on Wheat or Corn: In vitro Measurements of Nutrient Release. *International Journal of Poultry Science,* 2004, vol. 3 (7), 450-455
- **MOURA, P. et al.** In vitro fermentation of xylo-oligosaccharides from corn cobs autohydrolysis by Bifidobacterium and Lactobacillus strains. *Lwt-Food Science and Technology,* 2007, vol. 40 (6), 963-972
- **DE MAESSCHALCK, C. et al.** Effects of Xylo-Oligosaccharides on Broiler Chicken Performance and Microbiota. *Applied and Environmental Microbiology,* 2015, vol. 81 (17), 5880-5888
- **DE WEIRDT, R. et al.** Human faecal microbiota display variable patterns of glycerol metabolism. *Fems Microbiology Ecology,* 2010, vol. 74 (3), 601-611
- **VAN IMMERSEEL, F. et al.** Medium-chain fatty acids decrease colonization and invasion through hilA suppression shortly after infection of chickens with Salmonella enterica serovar enteritidis. *Applied and Environmental Microbiology,* 2004, vol. 70 (6), 3582-3587
- **MIKKELSEN et al.** Effects of physical properties of feed on microbial ecology and survival of Salmonella enterica serovar typhimurium in the pig gastrointestinal tract. *Applied and environmental microbiology,* 2004, vol. 70 (6), 3485-3492
- **MARTIN-PELAEZ et al.** Different fibrous ingredients and coarsely ground maize affect hindgut fermentation in the pig in vitro but not Salmonella typhimurium survival. *Animal feed science and technology,* 2009, vol. 153 (1-2), 141-152
- **EECKHAUT et al.** Arabinoxylooligosaccharides form wheat bran inhibit Salmonella colonization in broiler chickens. *Poultry Science,* 2008, vol. 87 (11), 2329-2334
- **DZIEDZIC KRZYSZTOF et al.** Effect of wheat dietary fiber particle size during digestion in vitro on bile acid, faecal bacteria and short chain fatty acid content. *Plant foods for human nutrition,* 2016, vol. 71 (2), 151-157

SEQUENCE LISTING

<110> Universiteit Gent

<120> A wheat bran fraction for use to combat Salmonella infection

<130> P2016/039pct

<160> 6

<170> PatentIn version 3.5

<210> 1
<211> 19
<212> DNA
<213> Artificial sequence

<220>
<223> Primer

<400> 1
tcctacggga ggcagcagt 19

<210> 2
<211> 27
<212> DNA

<213> Artificial sequence

<220>
<223> Primer

<400> 2
ggactaacca gggtatctaa tcctgtt 27

<210> 3
<211> 20
<212> DNA
<213> Artificial sequence

<220>
<223> Primer

<400> 3
gcgacatttc actggaayws 20

<210> 4
<211> 25
<212> DNA
<213> Artificial sequence

<220>
<223> Primer

<220>
<221> misc_feature
<222> (23)..(23)
<223> n is a, c, g, or t

<400> 4
cctgcctttg caatrtcacr aangc 25

<210> 5
<211> 27
<212> DNA
<213> Artificial sequence

<220>
<223> Primer

<220>
<221> misc_feature
<222> (1)..(4)
<223> n is a, c, g, or t

<400> 5
nnnnctcgag atcgttaagc gtgatgg 27

<210> 6
<211> 28
<212> DNA
<213> Artificial sequence

<220>
<223> Primer

<220>
<221> misc_feature
<222> (1)..(4)
<223> n is a, c, g, or t

<400> 6
nnnnggatcc cgacaccgta gatcgaag 28